# EUROPÄISCHE PATENTSCHRIFT

(11) **EP 2 933 295 B1**
(45) Veröffentlichungstag und Bekanntmachung des Hinweises auf die Patenterteilung: **06.07.2016**
(21) Anmeldenummer: 14164801.4
(22) Anmeldetag: 15.04.2014
(51) Int. Cl.: C08L 77/06, C08L 77/08, C08L 77/02, C08K 7/14

(54) **Polyamidformmasse und deren Verwendung**
Polyamide moulding material and its application
Masse moulée en polyamide et son utilisation

(43) Veröffentlichungstag der Anmeldung: 21.10.2015
(73) Patentinhaber: EMS-PATENT AG, 7013 Domat / Ems (CH)
(72) Erfinder: Aepli, Etienne, 7013 Domat/Ems (CH)
(74) Vertreter: Pfenning, Meinig & Partner mbB

(56) Entgegenhaltungen:
- EP-A1- 1 942 147
- EP-A1- 2 402 224
- EP-A2- 0 523 445

## Beschreibung

Die Erfindung betrifft eine Polyamidformmasse, die ein amorphes Polyamid, ein teilkristallines aliphatisches Polyamid sowie Glasfasern zur Verstärkung enthält. Weiterhin enthält die erfindungsgemäße Polyamidformmasse ein Polyamid aus einem cycloaliphatischen Diamin und einer dimerisierten Fettsäure. Die erfindungsgemäßen Polyamidformmassen finden Verwendung bei der Herstellung von elektrischen oder elektronischen Bauteilen, Gehäusen oder Gehäusebestandteilen.

Für die Herstellung von elektrischen oder elektronischen Bauteilen sowie Gehäuse oder Gehäusebestandteile, insbesondere für tragbare elektronische Geräte, sind eine Vielzahl von modifizierten Polyamidformmassen aus dem Stand der Technik bekannt. Ein wichtiger Ansatz für die Modifizierung ist es hierbei, die mechanischen Eigenschaften, u.a. die Zähigkeit, dieser Kunststoffe zu optimieren.

So sind aus der EP 2 123 694 A1 teilkristalline, thermoplastisch verarbeitbare, teilaromatische Copolyamide bekannt, die auf einer Kombination von Terephthalsäure, einer dimerisierten Fettsäure sowie einem aliphatischen Diamin basieren.

Ebenso ist der Einsatz von dimerisierten Fettsäuren für Polyamide, die als Klebstoffe eingesetzt werden, bekannt. Hierzu zählen die DE 1720 832 und die US 4,218,351.

Ausgehend von diesem Stand der Technik war es Aufgabe der vorliegenden Erfindung, faserverstärkte Polyamidformmassen hinsichtlich der Zähigkeit (gemessen als Schlagzähigkeit, Kerbschlagzähigkeit oder Reißdehnung) zu optimieren, ohne dabei die Steifigkeit und Festigkeit stark zu beeinträchtigen.

Diese Aufgabe wird durch die Polyamidformmasse mit den Merkmalen des Anspruchs 1 gelöst. In Anspruch 14 werden erfindungsgemäße Verwendungen angegeben. Die weiteren abhängigen Ansprüche zeigen vorteilhafte Weiterbildungen auf.

Erfindungsgemäß wird eine Polyamidformmasse mit folgender Zusammensetzung bereitgestellt:
A) von 10 bis 86 Gew.-% mindestens eines amorphen Polyamids,
B) von 2 bis 30 Gew.-% mindestens eines teilkristallinen aliphatischen Polyamids,
C) von 2 bis 40 Gew.-% mindestens eines Polyamids gebildet aus mindestens einem cycloaliphatischen Diamin ausgewählt aus der Gruppe bestehend aus Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,2-(4,4'-Diaminodicyclohexyl)-propan (PACP) oder Mischungen davon und mindestens einer dimerisierten Fettsäure,
D) von 10 bis 70 Gew.-% Glasfasern,
E) von 0 bis 40 Gew.-% partikuläre Füllstoffe sowie
F) von 0 bis 10 Gew.-% weitere Additive,

Dabei ergänzen sich die Mengenanteile der Komponenten D) und E) zu maximal 70 Gew.-% und die Mengenanteile der Komponenten A) bis F) zu 100 Gew.-%.

Bei weniger als 2 Gew.-% des Polyamids C) ist keine Verbesserung der Zähigkeit mehr zu beobachten. Werden hingegen mehr als 40 Gew.-% des Polyamids C) eingesetzt, werden sowohl die Steifigkeit (gemessen als Zug-E-Modul) als auch die Festigkeit (gemessen als Reißfestigkeit) zu stark verringert.

Die Polyamidformmasse enthält bevorzugt 12 bis 61,8 Gew.-%, besonders bevorzugt 14 bis 44,6 Gew.-% des mindestens einen amorphen Polyamids A.

Das mindestens eine teilkristalline aliphatische Polyamid B) kann bevorzugt in einer Menge von 5 bis 25 Gew.-%, besonders bevorzugt von 10 bis 20 Gew.-% enthalten sein.

Hinsichtlich des mindestens einen Polyamids C) sind bevorzugt 3 bis 30 Gew.-%, besonders bevorzugt 5 bis 25 Gew.-% in der Formmasse enthalten.

Der Anteil der Glasfasern in der Formmasse liegt vorzugsweise im Bereich von 30 bis 69,9 Gew.-%, besonders bevorzugt von 40 bis 69,8 Gew.-%.

Die weiteren Füllstoffe können bevorzugt in einem Anteil von 0,1 bis 30 Gew.-%, besonders bevorzugt 0,2 bis 25 Gew.-% in der Formmasse enthalten sein. Der Gewichtsanteil der weiteren Additive in der Formmasse beträgt bevorzugt von 0,1 bis 7 Gew.-%, besonders bevorzugt von 0,2 bis 5 Gew.-%.

Bei all diesen bevorzugten Mengenanteilen gilt als Regel, dass sich die Mengenanteile der Komponenten D) und E) zu maximal 70 Gew.-% addieren und sich die Mengenanteile der Komponenten A) bis F) auf 100 Gew.-% ergänzen.

Für die Bildung des Polyamids C) wird vorzugsweise mindestens eine dimerisierte Fettsäure mit 30 bis 50 C-Atomen, bevorzugt mit 35 bis 45 C-Atomen und besonders bevorzugt mit 36 oder 44 C-Atomen eingesetzt.

Eine bevorzugte Ausführungsform der erfindungsgemäßen Polyamidzusammensetzung sieht vor, dass das Polyamid C) aus mindestens einem cycloaliphatischen Diamin ausgewählt aus der Gruppe bestehend aus Bis-(4-amino-3-methyl-cyclohexyl)-methan (MACM), Bis-(4-Amino-3,5-dimethyl-cyclohexyl)-methan (TMDC) oder Mischungen hiervon und mindestens einer dimerisierten Fettsäure gebildet ist.

Besonders bevorzugt ist das Polyamid C) aus mindestens einem cycloaliphatischen Diamin ausgewählt aus der Gruppe bestehend aus Bis-(4-amino-3-methyl-cyclohexyl)-methan (MACM), Bis-(4-Amino-3,5-dimethyl-cyclohexyl)-methan (TMDC) oder Mischungen hiervon und einer dimerisierten Fettsäure mit 36 C-Atomen gebildet.

Die relative Viskosität (RV) der Polyamide (C) beträgt 1,35 bis 1,85 bevorzugt 1,40 bis 1,75, besonders bevorzugt 1,45 bis 1,60 beträgt, gemessen mit 0,5 g in 100 ml m-Kresol bei 20°C.

Das amorphe Polyamid A) ist vorzugsweise ausgewählt aus der Gruppe bestehend aus PA 6I, PA 6I/6T, PA 6I/6T/6N, PA MXDI/6I, PA MXDI/XDT/6I/6T, PA MXDI/12I, PA MXDI, PA MACM10, PA MACM12, PA MACM14, PA MACM18, PA NDT/INDT, PATMDC12, PA MACMI/12, PA MACMT/12, PA MACMI/MACM12, PA MACMT/MACM12, PA MACMI/MACMN, PA MACMT/MACMN, PA MACMI/MACM36, PA MACMT/MACM36, PA MACMI/MACMT/12, PA 6I/MACMI/12, PA 6I/6T/MACMI/MACMT, PA 6I/6T/MACMI/MACMT/12, PA MACM6/11, PA 6I/6T/MACMI/MACMT/MACM12/612, PA MACMI/MACMT/MACM12/12, PA MACMI/MACMT/MACM12, PA 6I/6T/6N/MACMI/MACMT/MACMN, PA MACM10/10 und Mischungen oder Copolymere hiervon, wobei das MACM bis zu maximal 25 Mol-%, bezogen auf die Summe der molaren Anteile aller Monomere von 100 Mol-%, durch PACM und/oder das Laurinlactam ganz oder teilweise durch Caprolactam ersetzt sein kann.

Die amorphen Polyamide A) zeigen in der dynamischen Differenz-Kalorimetrie (engl. Differential Scanning Calorimetry, DSC) nach ISO 11357 bei einer Aufheizrate von 20 K/min eine Schmelzwärme von maximal 5 J/g, bevorzugt von maximal 3 J/g, besonders bevorzugt von 0 bis 1 J/g.

Die amorphen Polyamide A) zeigen aufgrund ihrer Amorphizität keinen Schmelzpunkt.

Besonders bevorzugt wird das amorphe Polyamid A) ausgewählt aus der Gruppe bestehend aus PA MACM12, PA MACM12/PACM12, PA MACMI/12, PA MACMI/MACMT/12, PA 6I/6T/MACMI/MACMT/12, PA 6I/6T/MACMI/MACMT/PACMI/PACMT/12, PA MACMI/MACMT/MACM12 und Mischungen hiervon.

Der Anteil des PACM im PA MACM12/PACM12 beträgt bevorzugt maximal 25 Mol-%, wobei die Summe der molaren Anteile aller Monomere 100 Mol-% ergibt. PA MACM12/PACM12 mit maximal 25 Mol-% PACM12 sind amorph und zeigen somit keinen Schmelzpunkt.

Unter den PA MACMI/12 sind diejenigen mit einem Anteil an Laurinlactam von 15 bis 50 Mol-% bevorzugt, wobei die Summe der molaren Anteile aller Monomere 100 Mol-% ergibt. Besonders bevorzugt sind PA MACMI/12 mit einem Anteil an Laurinlactam von 20 bis 40 Mol-%. Insbesondere bevorzugt sind PA MACMI/12 mit einem Anteil an Laurinlactam von 19 Mol-% oder 35 Mol-%.

Unter den PA MACMI/MACMT/12 sind diejenigen mit equimolarem Verhältnis Isophthalsäure zu Terephthalsäure und einem Anteil an Laurinlactam von 15 bis 40 Mol-% bevorzugt, wobei die Summe der molaren Anteile aller Monomere 100 Mol-% ergibt. Besonders bevorzugt besitzen die PA MACMI/MACMT/12 ein equimolares Verhältnis Isophthalsäure zu Terephthalsäure und einem Anteil an Laurinlactam von 20 bis 30 Mol-%. Insbesondere bevorzugt besitzt das PA MACMI/MACMT/12 das Molverhältnis 38/38/24.

Unter den PA 6I/6T/MACMI/MACMT/12 sind diejenigen mit equimolarem Verhältnis Isophthalsäure zu Terephthalsäure und einem Anteil an Laurinlactam von 1 bis 25 Mol-% bevorzugt, wobei die Summe der molaren Anteile aller Monomere 100 Mol-% ergibt. Besonders bevorzugt besitzen die PA 6I/6T/MACMI/MACMT/12 ein äquimolares Verhältnis Isophthalsäure zu Terephthalsäure und einem Anteil an Laurinlactam von 2 bis 15 Mol-%. Insbesondere bevorzugt besitzt das PA 6I/6T/MACMI/MACMT/12 das Molverhältnis 34/34/14/14/4.

Unter den PA 6I/6T/MACMI/MACMT/PACMI/PACMT/12 sind diejenigen mit äquimolarem Verhältnis Isophthalsäure zu Terephthalsäure und einem Anteil an Laurinlactam von 1 bis 25 Mol-% bevorzugt, wobei die Summe der molaren Anteile aller Monomere 100 Mol-% ergibt. Besonders bevorzugt besitzen die PA 6I/6T/MACMI/MACMT/PACMI/PACMT/12 ein äquimolares Verhältnis Isophthalsäure zu Terephthalsäure und einem Anteil an Laurinlactam von 2 bis 15 Mol-%. Insbesondere bevorzugt besitzen die PA 6I/6T/MACMI/MACMT/PACMI/PACMT/12 ein äquimolares Verhältnis Isophthalsäure zu Terephthalsäure, einen Anteil an PACM von 2 bis 7 Mol-% und einen Anteil an Laurinlactam von 2 bis 7 Mol-%.

Unter den PA MACMI/MACMT/MACM12 sind diejenigen mit äquimolarem Verhältnis Isophthalsäure zu Terephthalsäure und einem Anteil an Dodecandisäure von 30 bis 60 Mol-% bevorzugt, wobei die Summe der molaren Anteile aller Monomere 100 Mol-% ergibt. Besonders bevorzugt besitzen die PA MACMI/MACMT/MACM12 ein äquimolares Verhältnis Isophthalsäure zu Terephthalsäure und einen Anteil an Dodecandisäure von 40 bis 50 Mol-%. Insbesondere bevorzugt besitzt das PA MACMI/MACMT/MACM12 das Molverhältnis 27/27/46.

Enthalten die Polyamide nur Disäuren und Diamine so ergänzen sich deren molare Anteile auf 50 Mol-% für die Summe alle Diamine und 50 Mol-% für die Summe alle Disäuren und die Summe der Diamin- und Disäure-Anteile ergibt 100 Mol-% für das Polyamid.

Enthalten die Polyamide neben Disäuren und Diaminen auch Lactame oder α,ω-Aminosäuren zu x Mol-%, so beträgt die Summe aller Diamine nur noch (50-0,5 x) Mol-% und Summe aller Disäuren (50-0,5 x) Mol-%, bezogen auf 100 Mol-% Polyamid.

Bei den Mengenangaben zu den Disäuren und Diaminen der Polyamide gilt immer, dass die Summe der molaren Anteile aller Diamine gleich der Summe der molaren Anteile aller Disäuren ist.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Polyamiden wiederfindet.

Die relative Viskosität (RV) der amorphen Polyamide A) beträgt 1,35 bis 2,15, bevorzugt 1,40 bis 1,80, besonders bevorzugt 1,45 bis 1,60 beträgt, gemessen mit 0,5 g in 100 ml m-Kresol bei 20°C.

Das mindestens eine teilkristalline aliphatische Polyamid B) ist vorzugsweise ausgewählt aus der Gruppe bestehend aus PA 6, PA46, PA49, PA410, PA411, PA412, PA413, PA414, PA415, PA416, PA418, PA436, PA 66, PA 69, PA 610, PA 611, PA 612, PA 613, PA 614, PA 615, PA 616, PA 617, PA 618, PA 1010, PA 66/6, PA 6/66/12, PA 6/12, PA 11, PA 12, PA 912, PA 1212, 6T/6I, MXD6, MXD6/MXDI, MXD9, MXD10, MXD11, MXD12, MXD13, MXD14, MXD15, MXD16, MXD17, MXD18, MXD36, PACM9, PACM10, PACM11, PACM12, PACM13, PACM14, PACM15, PACM16, PACM17, PACM18, PACM36, Polyetheramiden, Polyetheresteramiden, Polyesteramiden und deren Mischungen oder Copolymere, insbesondere PA 6, PA 69, PA 610, PA 612, PA 614, PA 1010, PA 1212, PA 6/66/12, PA 6/66, PA 6/12, PA 11, PA 12, Polyetheramide, Polyetheresteramide und deren Mischungen oder Copolymere.

Die relative Viskosität (RV) der teilkristallinen aliphatischen Polyamide B) beträgt 1,50 bis 2,30, bevorzugt 1,55 bis 1,95, besonders bevorzugt 1,60 bis 1,70 beträgt, gemessen mit 0,5 g in 100 ml m-Kresol bei 20°C.

Die Einstellung der relativen Viskosität kann durch die Regelung der Polykondensation der Polyamide A), B) oder C) in einer dem Fachmann bekannten Weise mit difunktionellen oder monofunktionellen Aminen oder Carbonsäuren erfolgen.

Die in der erfindungsgemäßen Polyamidformmasse enthaltenen Glasfasern D) sind vorzugsweise ausgewählt aus Endlosfasern und/oder Kurzglasfasern. Im Falle von Kurzglasfasern weisen diese bevorzugt eine Länge von 0,2 bis 20 mm, besonders bevorzugt von 2 bis 12 mm auf.

Eine bevorzugte Ausführungsform der erfindungsgemäßen Polyamidformmassen sieht vor, dass der Querschnitt der Glasfasern rund ist, wobei die Glasfasern bevorzugt einen Durchmesser von 3 bis 20 µm, besonders bevorzugt 3 bis 15 µm und ganz besonders bevorzugt 3 bis 8 µm aufweisen.

Eine weitere bevorzugte Ausführungsform der erfindungsgemäßen Polyamidformmassen sieht vor, dass die Glasfasern flache Glasfasern sind und einen ovalen, elliptischen, eckigen oder rechteckigen Querschnitt aufweisen, wobei die flachen Glasfasern vorzugsweise mindestens eine der folgenden Eigenschaften aufweisen.

Für diese Fasern liegt die Faserlänge vorzugsweise im Bereich von 3 bis 40 µm. Die Länge der Nebenquerschnittsachse der flachen Glasfasern beträgt bevorzugt 3 bis 20 µm, besonders bevorzugt 4 bis 10 µm. Die Länge der Hauptquerschnittsachse der flachen Glasfasern beträgt bevorzugt 6 bis 40 µm, besonders bevorzugt 12 bis 30 µm. Weiterhin besitzen die flachen Glasfasern ein Aspektverhältnis, d.h. das Verhältnis der Hauptquerschnittsachse zur Nebenquerschnittsachse im Bereich von 1,5 bis 8, besonders bevorzugt von 2 bis 6 und ganz besonders bevorzugt von 3 bis 5.

Die partikulären Füllstoffe E) der erfindungsgemäßen Polyamidformmasse sind vorzugsweise ausgewählt aus der Gruppe bestehend aus: Talk, Glimmer, Silikaten, Quarz, Wollastonit, Kaolin, Kieselsäuren, Magnesiumcarbonat, Magnesiumhydroxid, Kreide, gemahlenem oder gefälltem Calciumcarbonat, Kalk, Feldspat, anorganische Pigmente, wie z.B. Bariumsulfat, Zinkoxid, Zinksulfid, Lithopone und Titandioxid (Rutil, Anastas), Eisenoxid, Eisenmanganoxid, Metalloxide, insbesondere Spinelle, wie z.B. Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Rutil-Pigmente wie Titan-Zink-Rutil, Nickel-Antimon-Titanat, Chrom-Antimon-Titanat, hart- oder weichmagnetische Metallen oder Legierungen bzw. Keramiken, hohlkugeligen Silikatfüllstoffen, Aluminiumoxid, Bornitrid, Borcarbid, Aluminiumnitrid, Calciumfluorid und Mischungen hiervon. Die Füllstoffe können auch oberflächenbehandelt sein.

Die partikulären Füllstoffe E) besitzen vorzugsweise eine mittlere Partikelgröße (D50) im Bereich von 0.1-40 µm, bevorzugt im Bereich von 0.2-20 µm, insbesondere im Bereich von 0.3-10 µm.

Besonders bevorzugt werden als partikuläre Füllstoffe E) anorganische Weißpigmente verwendet. Insbesondere ist bevorzugt, dass die partikulären Füllstoffe E) ausschließlich aus diesen Weißpigmenten gebildet werden. In diesem Fall ist oder besteht Komponente (E) ausschliesslich aus den anorganischen Weißpigmenten, ausgewählt aus der Gruppe Bariumsulfat, Zinkoxid, Zinksulfid, Lithopone und Titandioxid (Rutil, Anastas), wobei die Weißpigmente bevorzugtermaßen über eine mittlere Partikelgröße (D50) im Bereich von 0.1-40 µm, besonders bevorzugt im Bereich von 0.1-20 µm, insbesondere bevorzugt im Bereich von 0.1-10 µm verfügen.

Darüber hinaus können die erfindungsgemäßen thermoplastischen Polyamidformmassen weiterhin übliche und dem Fachmann allgemein bekannte Additive F) enthalten, die vorzugsweise aus der Gruppe bestehend aus Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, insbesondere auf Basis von Kupferhalogeniden und Alkalihalogeniden, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fließhilfsmitteln, Gleitmitteln, Entformungsmitteln, Weichmachern, Pigmenten (verschieden von Weißpigmenten), Farbstoffen, Markierungsstoffen und Mischungen hiervon ausgewählt sind.

Verwendung finden die erfindungsgemäßen Polyamidformmassen zur Herstellung von Formkörpern, insbesondere Teile eines elektrischen oder elektronischen Bauteils, eines Gehäuses oder eines Gehäusebestandteils, vorzugsweise Gehäuse oder Gehäuseteile für tragbare elektronische Geräte, Haushaltsgeräte, Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien.

Erfindungsgemäß ist es besonders bevorzugt, dass die Polyamidformmasse frei von olefinischen Schlagzähmodifikatoren und Elastomeren, insbesondere frei von Polyolefinen ist. Überraschenderweise konnte nämlich gezeigt werden, dass auch bei Abwesenheit von Schlagzähmodifikatoren aufgrund der Anwesenheit der Komponente C) deutlich verbesserte Zähigkeit festzustellen sind.

Die dimerisierte Fettsäure der Komponenten C) weist eine Säurezahl im Bereich von 145-210 mg KOH/g, bevorzugt im Bereich von 192-200 mg KOH/g auf. Ihr Gehalt an monofunktioneller Säure beträgt maximal 5 %, an bifunktioneller Säure mindestens 92 % und an trifunktioneller Säure maximal 4 %. Die Säurezahl bzw. der Gehalt der den verschiedenen Säuren wird gemessen nach AOCS Te 1a-64 bzw. AOCS Tf 5-91. In Frage kommen beispielsweise Produkte, mit 36 Kohlenstoffatomen wie sie unter dem Markennamen Pripol von Croda insbesondere Pripol 1013, 1012, 1009 oder 1006 (mit 44 Kohlenstoffatomen) oder unter dem Markennamen Empol von Cognis insbesondere Empol 1012, 1016, oder 1062 oder unter dem Markennamen Radiacid 0970 von Oleon erhältlich sind, oder Produkte mit 44 Kohlenstoffatomen beispielsweise Pripol 1004 von Croda.

Die verwendeten Schreibweisen und Abkürzungen für Polyamide und deren Monomere entsprechen der ISO-Norm 1874-1:1992.

MACM steht für die Bezeichnung Bis(4-amino-3-methyl-cyclohexyl)-methan (CAS Nr. 6864-37-5). PACM steht für die Bezeichnung Bis(4-amino-cyclohexyl)-methan (CAS Nr. 1761-71-3). EACM steht für die Bezeichnung Bis-(4-Amino-3-ethyl-cyclohexyl)-methan (CAS Nr. 1064114-65-3), TMDC steht für die Bezeichnung Bis-(4-Amino-3,5-dimethyl-cyclohexyl)-methan (CAS Nr. 65962-45-0), PACP steht für die Bezeichnung 2,2-(4,4'-Diaminodicyclohexyl)-propan (CAS Nr. 3377-24-0)

### Herstellung der Polyamide C)

Die Herstellung der Polyamide C) erfolgt in bekannter Weise in bekannten rührbaren Druckautoklaven mit einem Vorlagegefäß und einem Reaktionsgefäß:
Im Vorlagegefäß wird deionisiertes Wasser vorgelegt und die Monomere und Additive (z.B. Kondensationskatalysatoren, Kettenregler, Entschäumer, Stabilisatoren) zugegeben. Danach wird mehrfach mit Stickstoff inertisiert. Unter Rühren wird auf 150 bis 200 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 260 bis 290 °C bei einem Druck von maximal 20 bar aufgeheizt. Der Ansatz wird in der Druckphase für 0.5 bis 4 Stunden auf der Reaktionstemperatur gehalten. In der anschließenden Entspannungsphase wird der Druck innerhalb von 1 bis 4 Stunden auf atmosphärischen Druck reduziert, wobei die Temperatur leicht sinken kann. In der folgenden Entgasungsphase wird der Ansatz bei atmosphärischem Druck für 0.5 bis 3 Stunden auf einer Temperatur von 260 bis 280 °C gehalten. Die Polymerschmelze wird in Strangform ausgetragen, im Wasserbad bei 10 bis 80 °C abgekühlt und anschliessend granuliert. Das Granulat wird für 12 bis 48 Stunden bei 80 bis 120 °C unter Stickstoff oder im Vakuum auf einen Wassergehalt von unter 0.1 Gew.-% getrocknet.

### Herstellung der Polyamidformmassen

Zur Herstellung der Polyamidformmasse werden die Komponenten A) bis D) und gegebenenfalls E) und/oder F) auf üblichen Compoundiermaschinen, wie z.B. ein- oder zweiwelligen Extrudern oder Schneckenknetern, in der Polymerschmelze gemischt (compoundiert). Die Komponenten werden dabei einzeln dosiert u.z. in den Einzug oder in einen Sidefeeder. Die Komponenten A) bis C) und gegebenenfalls die Komponenten E) bzw. F) können auch in Form eines Dryblends zugeführt werden. In der Regel wird die verstärkende Komponente D) und gegebenenfalls die Komponente E) einzeln über gravimetrische Dosierwaagen oder Sidefeeder in die Schmelze dosiert.

Die Komponente F) kann direkt oder in Form von Masterbatches eingebracht werden. Bei dem Trägermaterial der Masterbatches handelt es sich bevorzugt um ein Polyamid. Unter den Polyamiden eignen sich besonders PA 6, PA 11, PA 12, PA 6/12 oder PA MACMI/12.

Zur Dryblend-Herstellung werden die getrockneten Granulate der Polyamide A) bis C) und gegebenenfalls die weiteren Additive F) in einem geschlossenen Behälter vermischt. Diese Mischung wird mittels eines Taumelmischers, Rhönradmischers oder Taumeltrockners 10 - 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 70 bis 100°C für das erste Gehäuse und 230 °C bis 320 °C für die restlichen Gehäuse. Vor der Düse kann Vakuum angelegt oder atmosphärisch entgast werden. Die Schmelze wird in Strangform ausgetragen, im Wasserbad bei 10 bis 80 °C abgekühlt und anschließend granuliert. Das Granulat wird für 12 bis 24 Stunden bei 80 bis 120 °C unter Stickstoff oder im Vakuum auf einen Wassergehalt von unter 0.1 Gew.-% getrocknet.

Anhand der nachfolgenden Beispiele soll der erfindungsgemäße Gegenstand näher erläutert werden, ohne diesen auf die hier gezeigten spezifischen Ausführungsformen einschränken zu wollen.

### Beispiele

### Herstellung von PA MACM36 als Beispiel für die Herstellung des Polyamids C)

Im Vorlagegefäss eines 300 l Druckautoklaven werden 42 kg deionisiertes Wasser vorgelegt und 52,66 kg dimere Fettsäure eingerührt. Danach werden 22,23 kg Bis-(3-methyl-4-aminocyclohexyl)methan (MACM), 15 g Antifoam RD 10 Gew.-% Emulsion (Entschäumer), 8 g Phosphinsäure (Kondensationskatalysator) und zum Schluss 70 g Benzoesäure (Kettenregler) zugegeben. Daraufhin wird wie folgt verfahren:
- Nach 10-maliger Inertisierung wird bis auf 190 °C aufgeheizt. Die homogene Lösung wird bei 190 °C durch ein Sieb in das Reaktiongefäss gepumpt.
- Unter Rühren wird dort der Ansatz auf 270 °C aufgeheizt und 1 Stunde bei 20 bar in der Druckphase gehalten. Innerhalb von 2 Stunden wird auf atmosphärischen Druck entspannt und anschliessend bei 270 °C 2 Stunden entgast.
- Die Polymerschmelze wird ausgetragen, im Wasserbad (20 °C) abgekühlt und granuliert. Das Granulat wird bei 80 °C im Vakuum (30 mbar) für 24 Stunden auf einen Wassergehalt von unter 0.1 Gew.-% getrocknet.
Die relative Viskosität des Produkts betrug 1.54.

### Herstellung der Polyamidformmasse aus Beispiel B4

Die getrockneten Granulate der Polyamide A), B) und C) wurden zusammen mit dem Weißpigment und den beiden Hitzestabilisatoren zu einem Dryblend vermischt, u.z. im in der Tabelle 1 angegebenen Verhältnis. Diese Mischung (40 kg) wird mittels eines Taumelmischers ca. 20 Minuten lang homogenisiert.

Die Polyamidformmasse wurde auf einem Zweiwellenextruder der Firma Werner & Pfleiderer Typ ZSK 25 hergestellt. Das Dryblend wurde dabei über eine Dosierwaage in den Einzug dosiert. Die Glasfaser 1 wurde über einen Sidefeeder 6 Gehäuseeinheiten vor der Düse in die Schmelze gefördert. Die Temperatur des ersten Gehäuses wurde auf 70 °C eingestellt, diejenige der restlichen Gehäuse auf 280 °C. Es wurde eine Drehzahl von 200 U/min und ein Durchsatz von 13 kg/h verwendet und atmosphärisch entgast. Die Stränge wurden im Wasserbad abgekühlt, geschnitten und das erhaltene Granulat bei 100 °C für 24 h im Vakuum (30 mbar) auf einen Wassergehalt unter 0,1 Gew.-% getrocknet.

### Herstellung der Prüfkörper

Die Prüfkörper wurden auf einer Spritzgussmaschine der Firma Arburg, Modell Allrounder 420 C 1000-250 hergestellt. Dabei wurden aufsteigende Zylindertemperaturen von 230 °C bis 310 °C verwendet. Die Formtemperatur betrug 80 °C.

Die Prüfkörper wurden in trockenem Zustand verwendet; dazu wurden sie nach dem Spritzguss mindestens 48 h bei Raumtemperatur in trockener Umgebung, d.h. über Silicagel gelagert.

In dieser Anmeldung verwendete Messmethoden:
Zug-E-Modul:
   ISO 527 mit einer Zuggeschwindigkeit von 1 mm/min
   ISO-Zugstab, Norm: ISO/CD 3167, Typ A1, 170 x 20/10 x 4 mm, Temperatur 23 °C
Reißfestigkeit und Reißdehnung:
   ISO 527 mit einer Zuggeschwindigkeit von 5 mm/min
   ISO-Zugstab, Norm: ISO/CD 3167, Typ A1, 170 x 20/10 x 4 mm, Temperatur 23 °C
Schlagzähigkeit nach Charpy:
   ISO 179/*eU
   ISO-Prüfstab, Norm: ISO/CD 3167, Typ B1, 80 x 10 x 4 mm, Temperatur 23 °C
   * 1 = nicht instrumentiert, 2 = instrumentiert
Kerbschlagzähigkeit nach Charpy:
   ISO 179/*eA
   ISO-Prüfstab, Norm: ISO/CD 3167, Typ B1, 80 x 10 x 4 mm, Temperatur 23 °C
   * 1 = nicht instrumentiert, 2 = instrumentiert
Relative Viskosität
   ISO 307
   Granulat
   0,5 g in 100 ml m-Kresol
   Temperatur 20 °C
   Berechnung der relativen Viskosität (RV) nach RV = t/t₀ in Anlehnung an Abschnitt 11 der Norm.
Schmelzwärme:
   ISO-Norm 11357
   Granulat
   Die Differential Scanning Calorimetry (DSC) wurde mit einer Aufheizrate von 20 K/min durchgeführt.

In den nachfolgenden Tabellen erfolgt eine Gegenüberstellung der mechanischen Eigenschaften von erfindungsgemäßen Beispielen (B2, B4, B6, B8 und B9) und Vergleichsbeispielen (VB1, VB3, VB5, VB7, VB10, VB11, VB12, VB13 und VB14) mit der Angabe der genauen Zusammensetzungen der einzelnen Formmassen.

In den Beispielen und Vergleichsbeispielen der Tabellen 1 bis 3 wurden folgende Materialien verwendet:
Komponente A)
   - PA MACM12: amorphes Polyamid MACM12 aus Bis(3-methyl-4-amino-cyclohexyl)-methan und Dodecandisäure RV 1,52 (gemessen mit 0,5 g in 100 ml m-Kresol bei 20 °C) Glasübergangstemperatur 155 °C
Komponente B)
   - PA 12: teilkristallines Polyamid 12 aus Laurinlactam RV 1,62 (gemessen mit 0,5 g in 100 ml m-Kresol bei 20 °C) Schmelzpunkt 178 °C
Komponente C)
   - PA MACM36: amorphes Polyamid MACM36 aus Bis(3-methyl-4-amino-cyclohexyl)methan (Laromin C260 von BASF erhältlich) und dimerer Fettsäure mit 36 Kohlenstoffatomen (dimere Fettsäure Radiacid 0970 von Oleon erhältlich) RV 1,54 (gemessen mit 0,5 g in 100 ml m-Kresol bei 20 °C) Glasübergangstemperatur 76 °C
   - PA TMDC36: amorphes Polyamid TMDC36 aus Bis-(4-Amino-3,5-dimethyl-cyclohexyl)-methan (3,3',5,5'-Tetramethyl-4,4'-diamino-dicyclohexylmethan von BASF erhältlich) und di-merer Fettsäure mit 36 Kohlenstoffatomen (dimere Fettsäure Radiacid 0970 von Oleon erhältlich) RV 1,53 (gemessen mit 0,5 g in 100 ml m-Kresol bei 20 °C) Glasübergangstemperatur 92 °C
Komponente D)
   - Glasfaser 1: Micromax 771 strand
   runde Glasfaser
   3 mm lang, Durchmesser 6 µm
   erhältlich von Owens Corning, Belgien
   - Glasfaser 2: Nittobo CSG3PA-820
   flache Glasfaser
   3 mm lang,
   Hauptquerschnittsachse 28 µm, Nebenquerschnittsachse 7 µm
   Aspektverhältnis der Querschnittsachsen = 4
   erhältlich von Nitto Boseki, Japan
   - Glasfaser 3: Vetrotex 995 EC10-4.5
   runde Glasfaser
   4,5 mm lang, Durchmesser 10 µm
   erhältlich von Saint-Gobain Vetrotex, Frankreich
Komponente E)
   - Weisspigment: Sachtolith HD-S
   Zinksulfid
   mittlere Partikelgrösse (D50) im Bereich von 0.30 bis 0.35 µm
   erhältlich von Sachtleben Chemie, Deutschland
Komponente F)
   - Hitzestabilisator 1: Irganox 1098
   N,N'-Hexan-1,6-diylbis[3-(3,5-di-tert-butyl-4-hydroxyphenyl-propionamid, erhältlich von BASF, Deutschland
   - Hitzestabilisator 2: Hostanox PAR 24
   Tris(2,4-ditert-butylphenyl)phosphit
   erhältlich von Clariant, Schweiz

### Tafmer MC201

Olefinischer Schlagzähmodifikator, funktionalisiert mit Maleinsäureanhydrid, Blend aus Ethylen/Propylen-Copolymer und Ethylen/But-1-en-Copolymer im Gewichtsverhältniss 67 : 33, gepfropft mit 0,6 Gew.-% Maleinsäureanhydrid, erhältlich von Mitsui Chemicals, Japan.

**Tabelle 1**

| **Komponenten** | | **Einheit** | **VB1** | **B2** | **VB3** | **B4** | **VB5** | **B6** |
|---|---|---|---|---|---|---|---|---|
| PA MACM12 | A) | Gew.-% | 39,65 | 35,65 | 36,7 | 32,7 | 32,7 | 28,7 |
| PA 12 | B) | Gew.-% | 10 | 9 | 9,25 | 8,25 | 8,25 | 7,25 |
| PA MACM36 | C) | Gew.-% | - | 5 | - | 5 | - | 5 |
| Glasfaser 1 | D) | Gew.-% | 50 | 50 | 50 | 50 | 55 | 55 |
| Weißpigment | E) | Gew.-% | - | - | 3,7 | 3,7 | 3,7 | 3,7 |
| Hitzestabilisator 1 | F) | Gew.-% | 0,25 | 0,25 | 0,25 | 0,25 | 0,25 | 0,25 |
| Hitzestabilisator 2 | F) | Gew.-% | 0,1 | 0,1 | 0,1 | 0,1 | 0,1 | 0,1 |

| **Tests** | | | | | | | | |
|---|---|---|---|---|---|---|---|---|
| Zug-E-Modul | - | MPa | 12180 | 12240 | 12980 | 12830 | 14650 | 14520 |
| Reißfestigkeit | - | MPa | 165 | 160 | 180 | 175 | 180 | 175 |
| Reißdehnung | - | % | 3,1 | 3,7 | 2,9 | 3,2 | 2,4 | 2,7 |
| Schlagzähigkeit Charpy 23 °C | - | kJ/m2 | 58 | 79 | 70 | 78 | 68 | 71 |
| Kerbschlagzähigkeit Charpy 23 °C | - | kJ/m2 | 13 | 17 | 13 | 15 | 12 | 14 |

Tabelle 1 zeigt die positive Wirkung des Zusatzes von Polyamid PA MACM36 auf die Zähigkeit der unmodifizierten Polyamidformmasse (VB1).
Im Beispiel B2 führt der Zusatz von Polyamid PA MACM36 zur Polyamidformasse aus dem Vergleichsbeispiel VB1 zu einer Verbesserung der Schlagzähigkeit von 58 kJ/m² auf 79 kJ/m² und der Kerbschlagzähigkeit von 13 auf 17 kJ/m². Auch die Reißdehnung wird dabei von 3,1 auf 3,7 % angehoben. Der Zug-E-Modul zeigt dabei sogar eine leichte Steigerung.

Die Vergleiche zwischen VB3 und B4 bzw. VB5 und B6 zeigen ebenfalls Verbesserungen der Schlagzähigkeit, Kerbschlagzähigkeit und Reißdehnung. Bei den Zug-E-Moduli ist nur eine geringfügige Reduktion zu beobachten.

**Tabelle 2**

| **Komponenten** | | **Einheit** | **VB7** | **B8** | **B9** |
|---|---|---|---|---|---|
| PA MACM12 | A) | Gew.-% | 36,65 | 34,15 | 34,15 |
| PA 12 | B) | Gew.-% | 9 | 6,5 | 6,5 |
| PA MACM36 | C) | Gew.-% | - | 5 | - |
| PA TMDC36 | C) | Gew.-% | - | - | 5 |
| Glasfaser 2 | D) | Gew.-% | 50 | 50 | 50 |
| Weißpigment | E) | Gew.-% | 4,0 | 4,0 | 4,0 |
| Hitzestabilisator 1 | F) | Gew.-% | 0,25 | 0,25 | 0,25 |
| Hitzestabilisator 2 | F) | Gew.-% | 0,1 | 0,1 | 0,1 |

| **Tests** | | | | | |
|---|---|---|---|---|---|
| Zug-E-Modul | - | MPa | 13430 | 13340 | 13290 |
| Reißfestigkeit | - | MPa | 175 | 170 | 170 |
| Reißdehnung | - | % | 2,4 | 2,5 | 2,5 |
| Schlagzähigkeit Charpy 23 °C | - | kJ/m2 | 54 | 75 | 73 |
| Kerbschlagzähigkeit Charpy 23 °C | - | kJ/m2 | 15 | 18 | 18 |

Tabelle 2 zeigt die positive Wirkung des Zusatzes von Polyamid PA MACM36 im Beispiel B8 bzw. PA TMDC36 im Beispiel B9 auf die Zähigkeit der unmodifizierten Polyamidformmasse (VB7).
Sowohl durch den Zusatz von PA MACM36 (B8), als auch durch den Zusatz von PA TMDC36 (B9) werden die Schlagzähigkeiten, Kerbschlagzähigkeiten und Reißdehnungen gegenüber den Messwerten der Vergleichsvarianten (VB7) erhöht. Bei den Zug-E-Moduli ist nur eine geringfügige Reduktion zu beobachten.

**Tabelle 3**

| **Komponenten** | | **Einheit** | **VB10** | **VB11** | **VB12** | **VB13** | **VB14** |
|---|---|---|---|---|---|---|---|
| PA MACM12 | A) | Gew.-% | 29,7 | 28,2 | 26,7 | 25,2 | 23,7 |
| PA 12 | B) | Gew.-% | 10 | 9,5 | 9 | 8,5 | 8 |
| Tafmer MC201 | - | Gew.-% | - | 2 | 4 | 6 | 8 |
| Glasfaser 3 | D) | Gew.-% | 60 | 60 | 60 | 60 | 60 |
| Hitzestabilisator 1 | F) | Gew.-% | 0,2 | 0,2 | 0,2 | 0,2 | 0,2 |
| Hitzestabilisator 2 | F) | Gew.-% | 0,1 | 0,1 | 0,1 | 0,1 | 0,1 |

| **Tests** | | | | | | | |
|---|---|---|---|---|---|---|---|
| Zug-E-Modul | - | MPa | 15120 | 14150 | 13870 | 12850 | 11170 |
| Reißfestigkeit | - | MPa | 170 | 135 | 125 | 105 | 85 |
| Reißdehnung | - | % | 2,3 | 1,6 | 1,6 | 1,4 | 1,2 |
| Schlagzähigkeit Charpy 23 °C | - | kJ/m2 | 72 | 42 | 35 | 28 | 24 |
| Kerbschlagzähigkeit Charpy 23 °C | - | kJ/m2 | 14 | 13 | 13 | 12 | 11 |

Tabelle 3 zeigt die Wirkung von Tafmer MC201 - einem für Polyamide gängigen olefinischen Schlagzähmodifikator - in einem verstärkten Blend aus amorphem und teilkristallinem Polyamid. Die Zähigkeit der Polyamidformmasse wird durch den Zusatz des Schlagzähmodifikators deutlich verringert, wobei dieser negative Effekt mit steigender Menge des Schlagzähmodifikators zunimmt. Die Polyamidformmasse ohne Tafmer MC201 (VB10) zeigt eine Schlagzähigkeit von 72 kJ/m², mit Zusatz von 2 Gew.-% Schlagzähmodifikator (VB11) jedoch nur noch 42 kJ/m². Die Reißdehnung sinkt dabei von 2,3 % (VB10) auf nur noch 1,6 % (VB11) und auch die Kerbschlagzähigkeit sinkt, u.z. von 14 kJ/m² (VB10) auf 13 kJ/m² (VB11). Des Weiteren nimmt die Steifigkeit der Polyamidformmasse durch den Zusatz des Schlagzähmodifikators stark ab, wie am sinkenden Zug-E-Modul zu erkennen ist.

## Patentansprüche

1. Polyamidformmasse mit folgender Zusammensetzung:
A) von 10 bis 86 Gew.-% mindestens eines amorphen Polyamids,
B) von 2 bis 30 Gew.-% mindestens eines teilkristallinen aliphatischen Polyamids,
C) von 2 bis 40 Gew.-% mindestens eines Polyamids gebildet aus mindestens einem cycloaliphatischen Diamin ausgewählt aus der Gruppe bestehend aus Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,2-(4,4'-Diaminodicyclohexyl)propan (PACP) oder Mischungen davon und mindestens einer dimerisierten Fettsäure,
D) von 10 bis 70 Gew.-% Glasfasern,
E) von 0 bis 40 Gew.-% partikuläre Füllstoffe sowie
F) von 0 bis 10 Gew.-% weitere Additive,
wobei sich die Mengenanteile der Komponenten D) und E) zu maximal 70 Gew.-% addieren und sich die Mengenanteile der Komponenten A) bis F) auf 100 Gew.-% ergänzen.

2. Polyamidformmasse nach Anspruch 1 mit folgender Zusammensetzung:
A) von 12 bis 61,8 Gew.-%, bevorzugt 14 bis 44,6 Gew.-% des mindestens einen amorphen Polyamids,
B) von 5 bis 25 Gew.-%, bevorzugt 10 bis 20 Gew.-% des mindestens einen teilkristallinen aliphatischen Polyamids,
C) von 3 bis 30 Gew.-%, bevorzugt 5 bis 25 Gew.-% des mindestens einen Polyamids gebildet aus mindestens einem cycloaliphatischen Diamin ausgewählt aus der Gruppe bestehend aus Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,2-(4,4'-Diaminodicyclohexyl)-propan (PACP) oder Mischungen davon und mindestens einer dimerisierten Fettsäure,
D) von 30 bis 69,9 Gew.-%, bevorzugt 40 bis 69,8 Gew.-% Glasfasern,
E) von 0,1 bis 30 Gew.-%, bevorzugt 0,2 bis 25 Gew.-% partikuläre Füllstoffe sowie
F) von 0,1 bis 7 Gew.-%, bevorzugt 0,2 bis 5 Gew.-% weitere Additive,
wobei sich die Mengenanteile der Komponenten D) und E) zu maximal 70 Gew.-% addieren, und wobei sich die Mengenanteile der Komponenten A) bis F) auf 100 Gew.-% ergänzen.

3. Polyamidformmasse nach einem der vorhergehenden Ansprüche, **dadurch gekennzeichnet, dass** die mindestens eine dimerisierte Fettsäure 30 bis 50 C-Atome, bevorzugt 35 bis 45 C-Atome und besonders bevorzugt 36 oder 44 C-Atome aufweist.

4. Polyamidformmasse nach einem der vorhergehenden Ansprüche, **dadurch gekennzeichnet, dass** das Polyamid C) aus mindestens einem cycloaliphatischen Diamin ausgewählt aus der Gruppe bestehend aus Bis-(4-amino-3-methyl-cyclohexyl)-methan (MACM), Bis-(4-Amino-3,5-dimethyl-cyclohexyl)-methan (TMDC) oder Mischungen hiervon und mindestens einer dimerisierten Fettsäure gebildet ist.

5. Polyamidformmasse nach einem der vorhergehenden Ansprüche, **dadurch gekennzeichnet, dass** das Polyamid C) aus mindestens einem cycloaliphatischen Diamin ausgewählt aus der Gruppe bestehend aus Bis-(4-amino-3-methyl-cyclohexyl)-methan (MACM), Bis-(4-Amino-3,5-dimethyl-cyclohexyl)-methan (TMDC) oder Mischungen hiervon und einer dimerisierten Fettsäure mit 36 C-Atomen gebildet ist.

6. Polyamidformmasse nach einem der vorhergehenden Ansprüche, **dadurch gekennzeichnet, dass** das amorphe Polyamid A) ausgewählt ist aus der Gruppe bestehend aus PA 6I, PA 6I/6T, PA 6I/6T/6NDC, PA MXDI/6I, PA MXDI/XDT/6I/6T, PA MXDI/12I, PA MXDI, PA MACM10, PA MACM12, PA MACM14, PA MACM18, PA NDT/INDT, PA TMDC12, PA MACMI/12, PA MACMT/12, PA MACMI/MACM12, PA MACMT/MACM12, PA MACMI/MACMNDC, PA MACMT/MACMNDC, PA MACMI/MACM36, PA MACMT/MACM36, PA MACMI/MACMT/12, PA 6I/MACMI/12, PA 6I/6T/MACMI/MACMT, PA 6I/6T/MACMI/MACMT/12, PA MACM6/11, PA 6I/6T/MACMI/MACMT/MACM12/612, PA MACMI/MACMT/MACM12/12, PA MACMI/MACMT/MACM12, PA 6I/6T/6NDC/MACMI/MACMT/MACMNDC, PA MACM10/10 und Mischungen oder Copolymere hiervon, wobei das MACM bis zu maximal 25 Mol-%, bezogen auf die Summe der molaren Anteile aller Monomere von 100 Mol-%, durch PACM und/oder das Laurinlactam ganz oder teilweise durch Caprolactam ersetzt sein kann.

7. Polyamidformmasse nach einem der vorhergehenden Ansprüche, **dadurch gekennzeichnet, dass** das mindestens eine teilkristalline aliphatische Polyamid ausgewählt ist aus der Gruppe bestehend aus PA 6, PA46, PA49, PA410, PA411, PA412, PA413, PA414, PA415, PA416, PA418, PA436, PA 66, PA 69, PA 610, PA 611, PA 612, PA 613, PA 614, PA 615, PA 616, PA 617, PA 618, PA 1010, PA 66/6, PA 6/66/12, PA 6/12, PA 11, PA 12, PA 912, PA 1212, 6T/6I, MXD6, MXD6/MXDI, MXD9, MXD10, MXD11, MXD12, MXD13, MXD14, MXD15, MXD16, MXD17, MXD18, MXD36, PACM9, PACM10, PACM11, PACM12, PACM13, PACM14, PACM15, PACM16, PACM17, PACM18, PACM36, Polyetheramiden, Polyetheresteramiden, Polyesteramiden und deren Mischungen oder Copolymere, insbesondere PA 6, PA 69, PA 610, PA 612, PA 614, PA 1010, PA 1212, PA 6/66/12, PA 6/66, PA 6/12, PA 11, PA 12, Polyetheramide, Polyetheresteramide und deren Mischungen oder Copolymere.

8. Polyamidformmasse nach einem der vorhergehenden Ansprüche, **dadurch gekennzeichnet, dass** die Glasfasern ausgewählt sind aus Endlosfasern und/oder Kurzglasfasern, bevorzugt mit einer Länge von 0,2 bis 20 mm, besonders bevorzugt von 2 bis 12 mm.

9. Polyamidformmasse nach einem der vorhergehenden Ansprüche, **dadurch gekennzeichnet, dass** der Querschnitt der Glasfasern rund ist, wobei die Glasfasern bevorzugt einen Durchmesser von 3 bis 20 µm, besonders bevorzugt 3 bis 15 µm und ganz besonders bevorzugt 3 bis 8 µm aufweisen.

10. Polyamidformmasse nach einem der vorhergehenden Ansprüche, **dadurch gekennzeichnet, dass** die Glasfasern flache Glasfasern sind und einen ovalen, elliptischen, eckigen oder rechteckigen Querschnitt aufweisen, wobei die flachen Glasfasern vorzugsweise mindestens eine der folgenden Eigenschaften aufweisen:
• die Länge der Glasfasern beträgt 3 bis 40 µm,
• die die Länge der Nebenquerschnittsachse beträgt 3 bis 20 µm, bevorzugt 4 bis 10 µm,
• die Länge der Hauptquerschnittsachse 6 bis 40 µm, bevorzugt 12 bis 30 µm,
• das Aspektverhältnis, d.h. das Verhältnis der Hauptquerschnittsachse zur Nebenquerschnittsachse, beträgt 1,5 bis 8, bevorzugt 2 bis 6, und besonders bevorzugt 3 bis 5.

11. Polyamidformmasse nach einem der vorhergehenden Ansprüche, **dadurch gekennzeichnet, dass** die partikulären Füllstoffe ausgewählt sind aus der Gruppe bestehend aus Talk, Glimmer, Silikaten, Quarz, Wollastonit, Kaolin, Kieselsäuren, Magnesiumcarbonat, Magnesiumhydroxid, Kreide, gemahlenem oder gefälltem Calciumcarbonat, Kalk, Feldspat, anorganische Pigmente, wie z.B. Bariumsulfat, Zinkoxid, Zinksulfid, Lithopone und Titandioxid (Rutil, Anatas), Eisenoxid, Eisenmanganoxid, Metalloxide, insbesondere Spinelle, wie z.B. Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Rutil-Pigmente wie Titan-Zink-Rutil, Nickel-Antimon-Titanat, Chrom-Antimon-Titanat, hartoder weichmagnetische Metallen oder Legierungen bzw. Keramiken, hohlkugeligen Silikatfüllstoffen, Aluminiumoxid, Bornitrid, Borcarbid, Aluminiumnitrid, Calciumfluorid und Mischungen hiervon.

12. Polyamidformmasse nach einem der vorhergehenden Ansprüche, **dadurch gekennzeichnet, dass** die weiteren Additive ausgewählt sind aus der Gruppe bestehend aus Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, insbesondere auf Basis von Kupferhalogeniden und Alkalihalogeniden, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fliesshilfsmitteln, Gleitmitteln, Entformungsmitteln, Weichmachern, Pigmenten (verschieden von Weißpigmenten), Farbstoffen, Markierungsstoffen und Mischungen hiervon.

13. Polyamidformmasse nach einem der vorhergehenden Ansprüche, **dadurch gekennzeichnet, dass** die Polyamidformmasse frei von olefinischen Schlagzähmodifikatoren, insbesondere Polyolefinen ist.

14. Verwendung der Polyamidformmasse nach einem der Ansprüche 1 bis 13 zur Herstellung von Teilen eines elektrischen oder elektronischen Bauteils, eines Gehäuses oder eines Gehäusebestandteils, vorzugsweise Gehäuse oder Gehäuseteile für tragbare elektronische Geräte, Haushaltsgeräte, Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien.

## Claims

1. Polyamide moulding composition with the following composition:
A) from 10 to 86% by weight of at least one amorphous polyamide,
B) from 2 to 30% by weight of at least one partially crystalline aliphatic polyamide,
C) from 2 to 40% by weight of at least one polyamide formed from at least one cycloaliphatic diamine selected from the group consisting of bis-(4-amino-3-methylcyclohexyl)methane (MACM), bis-(4-aminocyclohexyl)methane (PACM), bis-(4-amino-3-ethylcyclohexyl)methane (EACM), bis-(4-amino-3,5-dimethylcyclohexyl)methane (TMDC), 2,2-(4,4'-diaminodicyclohexyl)propane (PACP) or mixtures thereof and at least one dimerised fatty acid,
D) from 10 to 70% by weight of glass fibres,
E) from 0 to 40% by weight of particulate fillers and also
F) from 0 to 10% by weight of further additives,
the quantity proportions of components D) and E) adding up to at most 70% by weight and the quantity proportions of components A) to F) adding up to 100% by weight.

2. Polyamide moulding composition according to claim 1 with the following composition:
A) from 12 to 61.8% by weight, preferably 14 to 44.6% by weight, of the at least one amorphous polyamide,
B) from 5 to 25% by weight, preferably 10 to 20% by weight, of the at least one partially crystalline aliphatic polyamide,
C) from 3 to 30% by weight, preferably 5 to 25% by weight of the at least one polyamide formed from at least one cycloaliphatic diamine selected from the group consisting of bis-(4-amino-3-methylcyclohexyl)methane (MACM), bis-(4-aminocyclohexyl)methane (PACM), bis-(4-amino-3-ethylcyclohexyl)methane (EACM), bis-(4-amino-3,5-dimethylcyclohexyl)methane (TMDC), 2,2-(4,4'-diaminodicyclohexyl)propane (PACP) or mixtures thereof and at least one dimerised fatty acid,
D) from 30 to 69.9% by weight, preferably 40 to 69.8% by weight, of glass fibres,
E) from 0.1 to 30% by weight, preferably 0.2 to 25% by weight, of particulate fillers and also
F) from 0.1 to 7% by weight, preferably 0.2% to 5% by weight, of further additives,
the quantity proportions of components D) and E) adding up to at most 70% by weight, and the quantity proportions of components A) to F) adding up to 100% by weight.

3. Polyamide moulding composition according to one of the preceding claims,
**characterised in that** the at least one dimerised fatty acid has 30 to 50 C atoms, preferably 35 to 45 C atoms and particularly preferred 36 or 44 C atoms.

4. Polyamide moulding composition according to one of the preceding claims,
**characterised in that** polyamide C) is formed from at least one cycloaliphatic diamine selected from the group consisting of bis-(4-amino-3-methylcyclohexyl)methane (MACM), bis-(4-amino-3,5-dimethylcyclohexyl)methane (TMDC) or mixtures hereof and at least one fatty acid.

5. Polyamide moulding composition according to one of the preceding claims,
**characterised in that** polyamide C) is formed from at least one cycloaliphatic diamine selected from the group consisting of bis-(4-amino-3-methylcyclohexyl)methane (MACM), bis-(4-amino-3,5-dimethylcyclohexyl)methane (TMDC) or mixtures hereof and a dimerised fatty acid with 36 C atoms.

6. Polyamide moulding composition according to one of the preceding claims,
**characterised in that** the amorphous polyamide A) is selected from the group consisting of PA 6I, PA 6I/6T, PA 6I/6T/6NDC, PA MXDI/6I, PA MXDI/XDT/6I/6T, PA MXDI/121, PA MXDI, PA MACM10, PA MACM12, PA MACM14, PA MACM18, PA NDT/INDT, PA TMDC12, PA MACMI/12, PA MACMT/12, PA MACMI/MACM12, PA MACMT/MACM12, PA MACMI/MACMNDC, PA MACMT/MACMNDC, PA MACMI/MACM36, PA MACMT/MACM36, PA MACMI/MACMT/12, PA 6I/MACMI/12, PA 6I/6T/MACMI/MACMT, PA 6I/6T/MACMI/MACMT/12, PA MACM6/11, PA 6I/6T/MACMI/MACMT/MACM12/612, PA MACMI/MACMT/MACM12/12, PA MACMI/MACMT/MACM12, PA 6/6T/6NDC/MACMI/MACMT/MACMNDC, PA MACM10/10 and mixtures or copolymers hereof, the MACM being able to be replaced up to at most 25% by mol, relative to the sum of the molar proportions of all the monomers of 100% by mol, by PACM, and/or the laurinlactam entirely or partially by caprolactam.

7. Polyamide moulding composition according to one of the preceding claims,
**characterised in that** the at least one partially crystalline aliphatic polyamide is selected from the group consisting of PA 6, PA 46, PA 49, PA 410, PA 411, PA 412, PA 413, PA 414, PA 415, PA 416, PA 418, PA 436, PA 66, PA 69, PA 610, PA 611, PA 612, PA 613, PA 614, PA 615, PA 616, PA 617, PA 618, PA 1010, PA 66/6, PA 6/66/12, PA 6/12, PA 11, PA 12, PA 912, PA 1212, 6T/6I, MXD6, MXD6/MXDI, MXD9, MXD10, MXD11, MXD12, MXD13, MXD14, MXD15, MXD16, MXD17, MXD18, MXD36, PACM9, PACM10, PACM11, PACM12, PACM13, PACM14, PACM15, PACM16, PACM17, PACM18, PACM36, polyether amides, polyether ester amides, polyester amides and mixtures or copolymers thereof, in particular PA 6, PA 69, PA 610, PA 612, PA 614, PA 1010, PA 1212, PA 6/66/12, PA 6/66, PA 6/12, PA 11, PA 12, polyether amides, polyether ester amides and mixtures or copolymers thereof.

8. Polyamide moulding composition according to one of the preceding claims,
**characterised in that** the glass fibres are selected from endless fibres and/or short glass fibres, preferably with a length of 0.2 to 20 mm, particularly preferred of 2 to 12 mm.

9. Polyamide moulding composition according to one of the preceding claims,
**characterised in that** the cross-section of the glass fibres is round, the glass fibres preferably having a diameter of 3 to 20 µm, particularly preferred 3 to 15 µm and very particularly preferred 3 to 8 µm.

10. Polyamide moulding composition according to one of the preceding claims,
**characterised in that** the glass fibres are flat glass fibres and have an oval, elliptical, polygonal or rectangular cross-section, the flat glass fibres preferably having at least one of the following properties:
• the length of the glass fibres is 3 to 40 µm,
• the length of the subsidiary cross-sectional axis is 3 to 20 µm, preferably 4 to 10 µm,
• the length of the main cross-sectional axis is 6 to 40 µm, preferably 12 to 30 µm,
• the aspect ratio, i.e. the ratio of the main cross-sectional axis to the subsidiary cross-sectional axis, is 1.5 to 8, preferably 2 to 6 and particularly preferred 3 to 5.

11. Polyamide moulding composition according to one of the preceding claims,
**characterised in that** the particulate fillers are selected from the group consisting of talcum, mica, silicates, quartz, wollastonite, kaolin, silicic acids, magnesium carbonate, magnesium hydroxide, chalk, ground or precipitated calcium carbonate, lime, feldspar, inorganic pigments, such as e.g. barium sulphate, zinc oxide, zinc sulphide, lithopones and titanium dioxide (rutile, anatase), iron oxide, iron-manganese oxide, metal oxides, in particular spinels, such as e.g. copper-iron spinel, copper-chromium oxide, zinc-iron oxide, cobalt-chromium oxide, cobalt-aluminium oxide, magnesium-aluminium oxide, copper-chromium-manganese mixed oxides, copper-manganese-iron mixed oxides, rutile pigments, such as titanium-zinc rutile, nickel-antimony titanate, chromium-antimony titanate, hard- or soft-magnetic metals or alloys or ceramics, hollow spherical silicate fillers, aluminium oxide, boron nitride, boron carbide, aluminium nitride, calcium fluoride and mixtures hereof.

12. Polyamide moulding composition according to one of the preceding claims,
**characterised in that** the further additives are selected from the group consisting of stabilisers, age-protecting agents, antioxidants, antiozonants, light-stability agents, UV stabilisers, UV absorbers, UV blockers, inorganic heat stabilisers, in particular based on copper halides and alkali halides, organic heat stabilisers, conductivity additives, carbon black, optical brighteners, processing aids, nucleation agents, crystallisation accelerators, crystallisation inhibitors, flow aids, lubricants, mould-release agents, plasticisers, pigments (different from white pigments), colourants, marking materials and mixtures hereof.

13. Polyamide moulding composition according to one of the preceding claims,
**characterised in that** the polyamide moulding composition is free of olefinic impact modifiers, in particular polyolefins.

14. Use of the polyamide moulding composition according to one of the claims 1 to 13 for the production of parts of an electrical or electronic component, of a housing or of a housing component, preferably housings or housing parts for portable electronic devices, household appliances, household machines, devices and apparatus for telecommunication and consumer electronics, interior and exterior parts in the automobile sector and in the field of other transport means, interior and exterior parts, preferably with a portable or mechanical function in the field of electrics, furniture, sport, mechanical engineering, the sanitary and hygiene field, medicine, energy- and actuation technology, particularly preferred mobile phones, smart phones, organisers, laptop computers, notebook computers, tablet computers, radios, cameras, clocks, calculators, devices for playing music or video, navigation devices, GPS devices, electronic picture frames, external hard disks and other electronic storage media.

## Revendications

1. Mélange à mouler de polyamides, ayant la composition suivante :
A) de 10 à 86 % en poids d'au moins un polyamide amorphe,
B) de 2 à 30 % en poids d'au moins un polyamide aliphatique partiellement cristallin,
C) de 2 à 40 % en poids d'au moins un polyamide formé à partir d'au moins une diamine cycloaliphatique choisie dans le groupe consistant en le bis(4-amino-3-méthyl-cyclohexyl)-méthane (MACM), le bis(4-amino-cyclohexyl)-méthane (PACM), le bis(4-amino-3-éthyl-cyclohexyl)-méthane (EACM), le bis(4-amino-3,5-diméthyl-cyclohexyl)-méthane (TMDC), le 2,2-(4,4'-diaminodicyclohexyl)propane (PACP) ou le mélange de ceux-ci, et d'au moins un acide gras dimérisé,
D) de 10 à 70 % en poids de fibres de verre,
E) de 0 à 40 % en poids de charges particulaires, ainsi que
F) de 0 à 10 % en poids d'autres additifs,
la somme des proportions pondérales des composants D) et E) étant au maximum de 70 % en poids, et la somme des proportions pondérales des composants A) à F) étant de 100 % en poids.

2. Mélange à mouler de polyamides selon la revendication 1, ayant la composition suivante :
A) de 12 à 61,8 % en poids, de préférence de 14 à 44,6 % en poids, du ou des polyamides amorphes,
B) de 5 à 25 % en poids, de préférence de 10 à 20 % en poids, du ou des polyamides aliphatiques partiellement cristallins,
C) de 3 à 30 % en poids, de préférence de 5 à 25 % en poids du ou des polyamides formés à partir d'au moins une diamine cycloaliphatique choisie dans le groupe consistant en le bis(4-amino-3-méthyl-cyclohexyl)-méthane (MACM), le bis(4-amino-cyclohexyl)-méthane (PACM), le bis(4-amino-3-éthyl-cyclohexyl)-méthane (EACM), le bis(4-amino-3,5-diméthyl-cyclohexyl)-méthane (TMDC), le 2,2-(4,4'-diaminodicyclohexyl)-propane (PACP) ou les mélanges de ceux-ci, et d'au moins un acide gras dimérisé,
D) de 30 à 69,9 % en poids, de préférence de 40 à 69,8 % en poids de fibres de verre,
E) de 0,1 à 30 % en poids, de préférence de 0,2 à 25 % en poids de charges particulaires, ainsi que
F) de 0,1 à 7 % en poids, de préférence de 0,2 à 5 % en poids d'autres additifs, la somme des proportions pondérales des composants D) et E) étant au maximum de 70 % en poids, et la somme des proportions pondérales des composants A) à F) étant de 100 % en poids.

3. Mélange à mouler de polyamides selon l'une des revendications précédentes, **caractérisé en ce que** le ou les acides gras dimérisés comprennent 30 à 50 atomes de carbone, de préférence 35 à 45 atomes de carbone et d'une manière particulièrement préférée 36 ou 44 atomes de carbone.

4. Mélange à mouler de polyamides selon l'une des revendications précédentes, **caractérisé en ce que** le polyamide C) est formé à partir d'au moins une diamine cycloaliphatique choisie dans le groupe consistant en le bis(4-amino-3-méthyl-cyclohexyl)-méthane (MACM), le bis(4-amino-3,5-diméthyl-cyclohexyl)-méthane (TMDC) ou les mélanges de ceux-ci, et d'au moins un acide gras dimérisé.

5. Mélange à mouler de polyamides selon l'une des revendications précédentes, **caractérisé en ce que** le polyamide C) est formé à partir d'au moins une diamine cycloaliphatique choisie dans le groupe consistant en le bis(4-amino-3-méthyl-cyclohexyl)-méthane (MACM), le bis(4-amino-3,5-diméthyl-cyclohexyl)-méthane (TMDC) ou les mélanges de ceux-ci, et d'un acide gras dimérisé ayant 36 atomes de carbone.

6. Mélange à mouler de polyamides selon l'une des revendications précédentes, **caractérisé en ce que** le polyamide amorphe A) est choisi dans le groupe consistant en PA 6I, PA 6I/6T, PA 6I/6T/6NDC, PA MXDI/6I, PA MXDI/XDT/6I/6T, PA MXDI/12I, PA MXDI, PA MACM10, PA MACM12, PA MACM14, PA MACM18, PA NDT/INDT, PA TMDC12, PA MACMI/12, PA MACMT/12, PA MACMI/MACM12, PA MACMT/MACM12, PA MACMI/MACMNDC, PA MACMT/MACMNDC, PA MACMI/MACM36, PA MACMT/MACM36, PA MACMI/MACMT/12, PA 6I/MACMI/12, PA 6I/6T/MACMI/MACMT, PA 6I/6T/MACMI/MACMT/12, PA MACM6/11, PA 6I/6T/MACMI/MACMT/MACM12/612, PA MACMI/MACMT/MACM12/12, PA MACMI/MACMT/MACM12, PA 6I/6T/6NDC/MACMI/MACMT/MACMNDC, PA MACM10/10, et les mélanges ou copolymères de ceux-ci, le MACM pouvant, jusqu'à un maximum de 25 % en moles par rapport à la somme des proportions molaires de tous les monomères de 100 % en moles, être remplacé par du PACM, et le laurinelactame pouvant en totalité ou en partie être remplacé par du caprolactame.

7. Mélange à mouler de polyamides selon l'une des revendications précédentes, **caractérisé en ce que** le ou les polyamides aliphatiques partiellement cristallins sont choisis dans le groupe consistant en PA 6, PA46, PA49, PA410, PA411, PA412, PA413, PA414, PA415, PA416, PA418, PA436, PA 66, PA 69, PA 610, PA 611, PA 612, PA 613, PA 614, PA 615, PA 616, PA 617, PA 618, PA 1010, PA 66/6, PA 6/66/12, PA 6/12, PA 11, PA 12, PA 912, PA 1212, 6T/6I, MXD6, MXD6/MXDI, MXD9, MXD10, MXD11, MXD12, MXD13, MXD14, MXD15, MXD16, MXD17, MXD18, MXD36, PACM9, PACM10, PACM11, PACM12, PACM13, PACM14, PACM15, PACM16, PACM17, PACM18, PACM36, les polyétheramides, les polyétheresteramides, les polyesteramides et les mélanges des copolymères de ceux-ci, en particulier PA 6, PA 69, PA 610, PA 612, PA 614, PA 1010, PA 1212, PA 6/66/12, PA 6/66, PA 6/12, PA 11, PA 12, les polyétheramides, les polyétheresteramides, et les mélanges ou copolymères de ceux-ci.

8. Mélange à mouler de polyamides selon l'une des revendications précédentes, **caractérisé en ce que** les fibres de verre sont choisies entre les fibres continues et/ou les fibres de verre courtes, ayant de préférence une longueur de 0,2 à 20 mm, d'une manière particulièrement préférée de 2 à 12 mm.

9. Mélange à mouler de polyamides selon l'une des revendications précédentes, **caractérisé en ce que** la section transversale des fibres de verre est circulaire, les fibres de verre présentant de préférence un diamètre de 3 à 20 µm, d'une manière particulièrement préférée de 3 à 15 µm et d'une manière tout particulièrement préférée de 3 à 8 µm.

10. Mélange à mouler de polyamides selon l'une des revendications précédentes, **caractérisé en ce que** les fibres de verre sont des fibres de verre plates et présentent une section transversale ovale, elliptique, polygonale ou rectangulaire, les fibres de verre plates présentant de préférence au moins l'une des propriétés suivantes :
- la longueur des fibres de verre est de 3 à 40 µm,
- la longueur de l'axe transversal secondaire est de 3 à 20 µm, de préférence de 4 à 10 µm,
- la longueur de l'axe transversal principal est de 6 à 40 µm, de préférence de 12 à 30 µm,
- le rapport d'aspect, c'est-à-dire le rapport entre l'axe transversal principal et l'axe transversal secondaire, est de 1,5 à 8, de préférence de 2 à 6 et d'une manière particulièrement préférée de 3 à 5.

11. Mélange à mouler de polyamides selon l'une des revendications précédentes, **caractérisé en ce que** les charges particulaires sont choisies dans le groupe consistant en le talc, le mica, les silicates, le quartz, la wollastonite, le kaolin, les silices, le carbonate de magnésium, l'hydroxyde de magnésium, la craie, le carbonate de calcium broyé ou précipité, la chaux, le feldspath, les pigments organiques tels que par exemple le sulfate de baryum, l'oxyde de zinc, le sulfure de zinc, la lithopone et le dioxyde de titane (rutile, anatase), l'oxyde de fer, l'oxyde de fer et de manganèse, les oxydes métalliques, en particulier les spinelles telles que par exemple la spinelle de cuivre-fer, l'oxyde de cuivre et de chrome, l'oxyde de zinc et de fer, l'oxyde de cobalt et de chrome, l'oxyde de cobalt et d'aluminium, l'oxyde de magnésium et d'aluminium, les oxydes mixtes de cuivre-chrome-manganèse, les oxydes mixtes de cuivre-manganèse-fer, les pigments de type rutile tels que le rutile de titane-zinc, le titanate de nickel et d'antimoine, le titanate de chrome et d'antimoine, les métaux magnétiques durs ou magnétiques doux, et les alliages ou céramiques, les charges silicatées sphériques creuses, l'oxyde d'aluminium, le nitrure de bore, le carbure de bore, le nitrure d'aluminium, le fluorure de calcium et le mélange de ceux-ci.

12. Mélange à mouler de polyamides selon l'une des revendications précédentes, **caractérisé en ce que** les autres additifs sont choisis dans le groupe consistant en les stabilisants, les agents de protection contre le vieillissement, les antioxydants, les antiozonants, les agents de protection contre la lumière, les stabilisants UV, les absorbants UV, les agents bloquant les UV, les thermostabilisants inorganiques, en particulier à base d'halogénures de cuivre et d'halogénures de métaux alcalins, les thermostabilisants organiques, les additifs de conductivité, le noir de carbone, les azurants optiques, les auxiliaires de mise en oeuvre, les agents de nucléation, les accélérateurs de cristallisation, les retardateurs de cristallisation, les auxiliaires d'écoulement, les lubrifiants, les agents de démoulage, les plastifiants, les pigments (différents des pigments blancs), les colorants, les substances de marquage et les mélanges de ceux-ci.

13. Mélange à mouler de polyamides selon l'une des revendications précédentes, **caractérisé en ce que** le mélange à mouler de polyamides est exempt d'agents oléfiniques modifiant la résistance au choc, en particulier de polyoléfines.

14. Utilisation du mélange à mouler de polyamides selon l'une des revendications 1 à 13 pour fabriquer des pièces d'un composant électrique ou électronique, d'un boîtier ou d'un constituant de boîtier, de préférence des boîtiers ou des éléments de boîtier pour des appareils électroniques portatifs, des appareils domestiques, des équipements ménagers, des appareils et équipements pour la télécommunication ou l'électronique de loisir, des pièces pour intérieur et extérieur dans le secteur automobile et dans le domaine d'autres moyens de transport, les pièces pour intérieur et extérieur, en particulier ayant une fonction portante ou mécanique dans le domaine de l'électricité, des meubles, du sport, de la construction mécanique, de l'hygiène et du sanitaire, de la médecine, des techniques liées à l'énergie et à la propulsion, d'une manière particulièrement préférée le téléphone mobile, les smartphones, les organiseurs, les ordinateurs portables, les blocs-notes électroniques, les tablettes électroniques, les postes de radio, les caméras, les montres, les calculateurs, les appareils de lecture de musique ou de vidéo, les appareils de navigation, les appareils GPS, les cadres de photos électroniques, les disques durs externes et d'autres supports de stockage électroniques.
